# EUROPÄISCHE PATENTSCHRIFT

(11) **EP 3 329 234 B1**
(45) Veröffentlichungstag und Bekanntmachung des Hinweises auf die Patenterteilung: **24.04.2019**
(21) Anmeldenummer: 16735607.0
(22) Anmeldetag: 28.06.2016
(51) Int. Cl.: G01K 15/00

(54) **VORRICHTUNG ZUR BESTIMMUNG UND/ODER ÜBERWACHUNG DER TEMPERATUR EINES MEDIUMS**
DEVICE FOR DETERMINING AND/OR MONITORING THE TEMPERATURE OF A MEDIUM
DISPOSITIF POUR DÉTERMINER ET/OU SURVEILLER LA TEMPÉRATURE D'UN MILIEU

(30) Priorität: 29.07.2015 DE 102015112426
(43) Veröffentlichungstag der Anmeldung: 06.06.2018
(73) Patentinhaber: Endress+Hauser Wetzer GmbH+Co. KG, 87484 Nesselwang (DE)
(72) Erfinder: UMKEHRER, Alfred, 87659 Hopferau (DE); VRDOLJAK, Pavo, 87484 Nesselwang (DE)
(74) Vertreter: Andres, Angelika Maria
(86) Internationale Anmeldenummer: PCT/EP2016/064983
(87) Internationale Veröffentlichungsnummer: WO 2017/016775

(56) Entgegenhaltungen:
- CN-A- 101 556 192
- CN-U- 204 269 258
- DE-A1-102010 040 039

## Beschreibung

Die Erfindung bezieht sich auf eine Vorrichtung zur Bestimmung und/oder Überwachung der Temperatur eines Mediums umfassend zumindest einen Temperatursensor mit zumindest einem Sensorelement und einer Elektronikeinheit. Ferner betrifft die vorliegende Erfindung ein Verfahren zur Kalibrierung und/oder Validierung einer solchen Vorrichtung.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials mit der Temperatur in Zusammenhang bringen, wie beispielsweise bei Verwendung von Widerstandselementen oder Thermoelementen. Dagegen wird bei Pyrometern zur Bestimmung der Temperatur einer Substanz dessen Wärmestrahlung ausgenutzt. Die jeweils zugrundeliegenden Messprinzipien sind jeweils in einer Vielzahl von Veröffentlichungen beschrieben worden.

Die Kalibrierung und/oder Validierung eines Thermometers wird üblicherweise in Kalibrierbädern, Öfen oder Fixpunkteinrichtungen durchgeführt. Sie erfolgt dann anhand einer Vergleichsmessung in einem Vergleichsmedium mit einer bekannten Vergleichstemperatur, d.h. bei einem festen charakteristischen Temperaturpunkt, wie beispielsweise dem Tripel- und/oder Schmelzpunkt eines Materials. Alternativ kann eine Kalibrierung und/oder Validierung auch anhand eines Referenzthermometers, beispielsweise anhand eines anhand des internationalen Standards IST-90 kalibrierten Platin-Elements, vorgenommen werden.

Als Vergleichsmedium wird häufig deionisiertes Eiswasser in einem Dewar-Gefäß eingesetzt. Vorteilhaft muss bei diesem Vergleichsmedium im Anschluss an die Vergleichsmessung keine aufwendige Reinigung des Messeinsatzes des Thermometers oder ähnliches erfolgen. So wird dieser charakteristische Temperaturpunkt unter anderem häufig genutzt, um den sogenannten R0-Wert (R=100Ω bei T=0°C) eines Widerstandstemperatursensors (RTD- Element für Resistance Temperature Detector) in Form eines Platinelements nach dem internationalen Standard IEC60751 zu bestimmen, wie beispielsweise für ein sogenanntes PT100 Element.

Üblicherweise muss ein Thermometer zur Durchführung einer Vergleichsmessung aus dem jeweiligen Prozess entfernt werden. Es sind jedoch auch Vorrichtungen bekannt geworden, die eine in situ Kalibrierung und/oder Validierung eines Thermometers ermöglichen, wie beispielsweise die in der DE 19941731 A1 beschriebene, miniaturisierte und in ein Thermometer integrierte Fixpunktzelle. Darüber hinaus wurde in der EP 1247268 B2 ein Verfahren zur in situ Kalibrierung von Temperatursensoren anhand von Kennlinien eines oder mehrerer Referenzelemente in Form von sekundären Temperatursensoren mit vom Temperatursensor verschiedenen Kennlinien beschrieben. Ähnlich ist aus der DE102010040039A1 ein Thermometer mit einem Referenzelement bekannt geworden, mittels welchem eine in situ Kalibrierung anhand eines Phasenübergangs zweiter Ordnung vorgenommen werden kann, bekannt Erwähnenswert sind auch die in den CN204269258 U und CN101556192 A beschriebenen Verfahren zur in-situ Kalibrierung eines Temperatursensors.

Unabhängig davon, ob ein Thermometer zur Kalibrierung und/oder Validierung aus dem jeweiligen Prozess entfernt werden muss oder nicht, muss eine Vergleichsmessung stets gesondert vom jeweiligen Prozess durchgeführt und die jeweils zur Kalibrierung aufgenommenen Messwerte gegebenenfalls in einem Kalibrierprotokoll festgehalten werden. Dies erfordert mehrere Arbeitsschritte vom Bedienpersonal.

Ausgehend vom Stand der Technik liegt der vorliegenden Erfindung die Aufgabe zugrunde, eine Vorrichtung zur Bestimmung und/oder Überwachung der Temperatur eines Mediums bereitzustellen und ein Verfahren zum Betrieben einer solchen Vorrichtung bereitzustellen, mittels welcher/welchem eine einfach durchzuführende Kalibrierung und/oder Validierung möglich ist.

Diese Aufgabe wird erfindungsgemäß gelöst durch eine Vorrichtung zur Bestimmung und/oder Überwachung der Temperatur eines Mediums nach Anspruch 1.

Das Thermometer ist also vorteilhaft selbst in der Lage, zu erkennen, ob zu einem gegebenen Zeitpunkt eine Vergleichsmessung durchgeführt wird und zeigt mittels der Anzeigeeinheit die Durchführung der Vergleichsmessung an. Es muss also lediglich gewährleistet werden, dass die Vergleichstemperatur und/oder ein Toleranzbereich des jeweils verwendeten Vergleichsmediums in der Eingabeeinheit hinterlegt sind. Diese Angaben können einerseits bereits bei der Herstellung des Thermometers hinterlegt werden, oder vom Bedienpersonal zu einem späteren Zeitpunkt eingegeben werden. Je nach Ausgestaltung können diese Angaben einmalig für eine Messung getätigt oder dauerhaft gespeichert werden. Ferner ist es denkbar, dass ebenfalls Angaben für ein oder mehrere Vergleichsmedien hinterlegt werden, wobei im letzteren Falle vor der Durchführung der Vergleichsmessung die jeweils relevanten hinterlegten Werte ausgewählt werden müssen.

Das Thermometer muss dann lediglich in das gewünschte Vergleichsmedium eingetaucht werden. Die Messwerterfassung während der Vergleichsmessung kann automatisch erfolgen.

In einer Ausgestaltung umfasst die Vorrichtung ferner eine Speichereinheit, auf welcher zumindest die zumindest eine Vergleichstemperatur und/oder der jeweilige Toleranzbereich, und/oder zumindest ein Vergleichstemperatur-Messwert, insbesondere gemeinsam mit der jeweils zugehörigen Vergleichstemperatur, speicherbar sind. Bevorzugt werden diese Größen gemeinsam mit einem Betriebsstundenzähler oder einer Echtzeit abgespeichert. Auf diese Weise können die in verschiedenen Vergleichsmessungen über einen längeren Zeitraum aufgenommenen Vergleichstemperatur-Messwerte automatisch und systematisch aufgezeichnet werden. Dies bringt eine weitere Erleichterung für das jeweilige Bedienpersonal.

Erfindungsgemäß ist in der Elektronikeinheit zumindest ein Algorithmus hinterlegt, wobei anhand des Algorithmus erkannt wird, ob der Temperatursensor in ein Vergleichsmedium eintaucht. Mittels des Algorithmus können verschiedene temperaturabhängige Größen berechnet werden, oder verschiedene Größen aus einer Temperaturkurve, das ist der Verlauf der mittels des Thermometers gemessenen Temperatur als Funktion der Zeit, ermittelt werden, wie beispielsweise eine Steigung der Temperaturkurve, oder eines Abschnitts der Temperaturkurve, die Zeit, welche zum Erreichen eines stabilen Vergleichstemperatur-Messwerts benötigt wird, oder auch ein Temperaturgradient. Insbesondere, wenn ein Vergleichsmedium mit einer charakteristischen Vergleichstemperatur gewählt wird, welches außerhalb des im Betrieb des Thermometers relevanten Temperaturbereichs, tritt bei Eintauchen des Thermometers in das Vergleichsmedium zum Eintauchzeitpunkt ein Temperatursprung in Richtung der Vergleichstemperatur statt. Diesem Temperatursprung folgt ein flacherer Kurvenverlauf auf die Vergleichstemperatur hin, und ab einer bestimmten minimalen Differenz zwischen der Vergleichstemperatur, das ist insbesondere der theoretische charakteristische Wert für diese Temperatur, und dem aktuellen Vergleichstemperatur-Messwert bewegt sich der Vergleichstemperatur-Messwert dann asymptotisch innerhalb eines bestimmten Toleranzintervalls auf die Vergleichstemperatur zu. Diese verschiedenen Abschnitte des Kurvenverlaufs können beispielsweise zur Erkennung der Durchführung einer Vergleichsmessung herangezogen werden.

Da für viele Anwendungen der Temperaturmessung, insbesondere im Feld der Prozess- und/oder Automatisierungstechnik, Temperaturen im Bereich von T≈0°C nicht auftreten kann besonders bevorzugt deionisiertes Eiswasser in einem Dewar-Gefäß als Vergleichsmedium gewählt werden, da dieses besonders einfach zu handhaben ist.

In einer Ausgestaltung handelt es sich bei der Anzeigeeinheit um eine optische Schnittstelle, insbesondere um eine LED oder um ein Display, oder um eine digitale Schnittstelle. Es kann auch gleichzeitig eine optische Schnittstelle in Form beispielsweise einer Anzeigelampe mit einem Display oder einer digitalen Schnittstelle kombiniert werden.

In einer bevorzugten Ausgestaltung ist die Elektronikeinheit dazu ausgestaltet, die Abweichung des Vergleichstemperatur-Messwerts von der Vergleichstemperatur zu ermitteln, und im Falle, dass die Abweichung einen vorgebbaren Grenzwert überschreitet, eine Meldung zu generieren und/oder mittels der Anzeigeeinheit anzuzeigen und/oder die Abweichung auf der Speichereinheit zu hinterlegen. Überschreitet die Abweichung den vorgebbaren Grenzwert, so kann darauf geschlossen werden, dass das Thermometer die Temperatur nicht mehr korrekt misst. Durch das zusätzliche Speichern der Abweichung zwischen der Vergleichstemperatur und dem Vergleichstemperatur-Messwert kann automatisch ein Kalibrierprotokoll erstellt werden, welches dann in der Elektronikeinheit abrufbar ist.

Eine weitere Ausgestaltung sieht vor, dass die Elektronikeinheit dazu ausgestaltet ist, im Falle, dass der Vergleichs-Temperaturmesswert außerhalb eines Toleranzbereichs liegt, eine Meldung zu generieren und/oder mittels der Anzeigeeinheit anzuzeigen.

In einer Ausgestaltung umfasst der Temperatursensor zumindest ein Referenzelement, welches zumindest teilweise aus einem Material gefertigt ist, welches zumindest einen Phasenübergang zweiter Ordnung bei einer vorgegebenen Referenztemperatur aufweist. Insbesondere handelt es sich dabei um eine der in der DE102010040039A1 beschriebenen Ausgestaltungen für ein Thermometer mit einem solchen Referenzelement.

Dabei ist es von Vorteil, wenn das Referenzelement und das Sensorelement auf zumindest einem oder zumindest zwei keramischen Substraten angeordnet sind, welches/welche jeweils im Bereich zumindest einer Seitenfläche metallisiert und über die Metallisierung/Metallisierungen thermisch gekoppelt, insbesondere über einen Löt- oder Sinterprozess verbunden ist/sind. Auf diese Weise kann ein guter Wärmetransport mittels Wärmeleitung durch den gesamten Temperatursensor erreicht werden, so dass das Sensorelement und das Referenzelement auf einer kurzen Zeitskala keine oder nur sehr geringe Temperaturunterschiede aufweisen. Dies betrifft insbesondere den Zeitpunkt des Eintauchens in ein Vergleichsmedium mit einer außerhalb der für die Anwendung des Thermometers relevanten Temperaturbereichs liegenden Vergleichstemperatur.

Ebenso ist es von Vorteil, wenn die Elektronikeinheit dazu ausgestaltet ist, eine Referenzmessung mittels des zumindest einen Referenzelements durchzuführen, bei welchem der zumindest eine Phasenübergang erkannt wird. Bevorzugt ist die zumindest eine Referenztemperatur auf der Speichereinheit hinterlegt. Der Phasenübergang kann anhand einer mit dem Phasenübergang einhergehenden Änderung einer physikalischen oder chemischen Größe detektiert werden, wie beispielsweise einer Änderung der Kristallstruktur des Volumens und/oder der dielektrischen bzw. elektrischen Eigenschaften des Materials, aus welchem das Referenzelement zumindest teilweise gefertigt ist.

Die erfindungsgemäße Aufgabe wird ferner gelöst durch ein Verfahren zur Kalibrierung und/oder Validierung einer erfindungsgemäßen Vorrichtung gemäß zumindest einer der beschriebenen Ausgestaltungen nach Anspruch 9.

In einer Ausgestaltung des Verfahrens werden zumindest eine bekannte Vergleichstemperatur zumindest eines Vergleichsmediums und/oder zumindest ein Toleranzbereich für zumindest eine Vergleichstemperatur gespeichert.

In einer Ausgestaltung wird ein Vergleichsmedium mit einer Vergleichstemperatur außerhalb des für die Vorrichtung relevanten Temperaturbereichs gewählt.

In einer Ausgestaltung werden in vorgebbaren Zeitintervallen mittels des Temperatursensors jeweils gemessene Vergleichstemperatur-Messwerte als Funktion der Zeit in Form einer Temperaturkurve aufgezeichnet, und/oder eine Steigung der Temperaturkurve oder eines Abschnitts der Temperaturkurve, die Zeit, welche zum Erreichen des Vergleichstemperatur-Messwerts benötigt wird, oder auch ein Temperaturgradient, insbesondere in Bezug auf ein vorgebbares Zeitintervall ermittelt. Insbesondere, wenn ein Vergleichsmedium mit einer charakteristischen Vergleichstemperatur gewählt wird, welches außerhalb des im Betrieb des Thermometers relevanten Temperaturbereichs, tritt bei Eintauchen des Thermometers in das Vergleichsmedium zum Eintauchzeitpunkt ein Temperatursprung in Richtung der Vergleichstemperatur statt.

In einer Ausgestaltung wird die Abweichung des Vergleichstemperatur-Messwerts von der Vergleichstemperatur bestimmt.

In einer weiteren Ausgestaltung des Verfahrens wird im Falle, dass die Abweichung einen vorgebbaren Grenzwert überschreitet und/oder im Falle, dass der Vergleichstemperatur-Messwert außerhalb des Toleranzbereichs liegt, eine Meldung generiert.

Im Falle, dass es sich bei der Vorrichtung um einen Temperatursensor mit zumindest einem Referenzelement handelt, wird die erfindungsgemäße Aufgabe ferner gelöst durch ein Verfahren zur Bestimmung einer Referenztemperatur, welches folgende Verfahrensschritte umfasst:
- Eintauchen des Temperatursensors in ein erstes Medium mit einer ersten Temperatur, welche unterhalb der Referenztemperatur liegt,
- Eintauchen des Temperatursensors in ein zweites Medium mit einer zweiten Temperatur, welche oberhalb der Referenztemperatur liegt,
- Aufzeichnen der mittels Temperatursensors in bestimmten Zeitintervallen jeweils ermittelten Temperatur-Messwerte als Funktion der Zeit,
- Aufzeichnen einer mit dem Phasenübergang einhergehenden physikalischen oder chemischen Größe des Referenzelements, welche bei der Referenztemperatur eine Änderung durchläuft, als Funktion der Zeit
- Ermittlung des Referenzzeitpunkts, an welchem der Phasenübergang stattgefunden hat, anhand der Änderung der physikalischen oder chemischen Größe, und
- Bestimmung der Abweichung des Temperatur-Messwerts zum Referenzzeitpunkt von der Referenztemperatur.

Die in Zusammenhang mit der Vorrichtung erläuterten Ausgestaltungen lassen sich mutatis mutandis auch auf die vorgeschlagenen Verfahren anwenden und umgekehrt.

Anhand der nachfolgendend beschriebenen Figuren wird die Erfindung näher erläutert. Es zeigen:
Fig. 1 eine schematische Skizze einer erfindungsgemäßen Vorrichtung.
Fig. 2 einen schematischen Verlauf einer Temperaturkurve,
Fig. 3 ein Blockdiagramm einer Variante des erfindungsgemäßen Verfahrens, und
Fig. 4 eine erfindungsgemäße Vorrichtung mit einem Referenzelement.

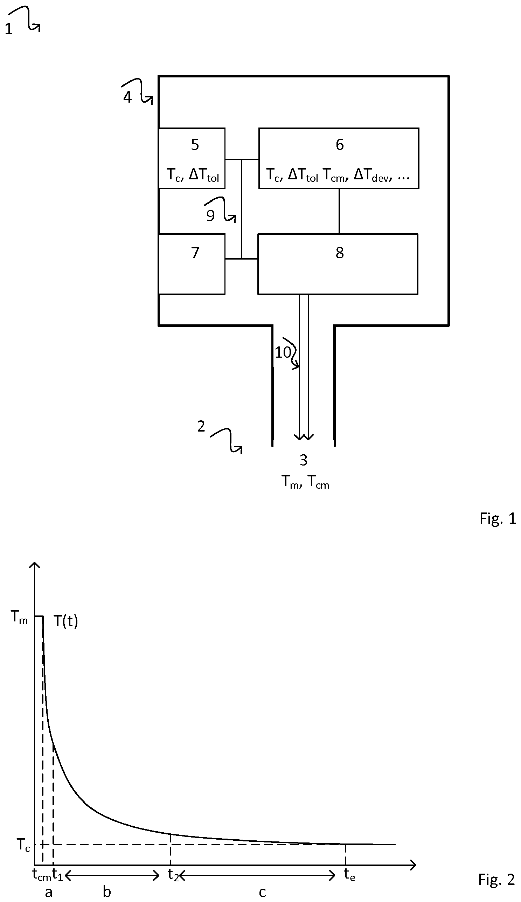

In Fig. 1 ist eine schematische Zeichnung für ein erfindungsgemäßes Thermometer 1 dargestellt. Das Thermometer 1 umfasst einen Temperatursensor 2 mit zumindest einem Sensorelement 3, mittels welchem eine Temperatur Tₘ eines Mediums ermittelt werden kann. Dabei kann es sich beispielsweise um ein Widerstandselement oder um ein Thermoelement handeln. Es versteht sich jedoch von selbst, dass die vorliegende Erfindung nicht auf einen speziellen Thermometertyp beschränkt, sondern für eine Vielzahl an Thermometern einsetzbar ist. Das Sensorelement 3 ist mittels zumindest zweier Anschlusskabel 10 mit einer Elektronikeinheit 4 verbunden. Diese wird oftmals auch als Transmitter bezeichnet. Die Elektronikeinheit 4 umfasst eine Eingabeeinheit 5, in welche vom jeweiligen Bedienpersonal zumindest eine Vergleichstemperatur T_{c} zumindest eines Vergleichsmediums und/oder ein Toleranzbereich ΔTₜₒₗ eingegeben werden kann. Weiterhin umfasst die Elektronikeinheit 4 eine Speichereinheit 6, in welcher unter anderem die Vergleichstemperatur T_{c} und/oder der Toleranzbereich ΔTₜₒₗ gespeichert werden können. In dieser Ausgestaltung umfasst die Elektronikeinheit 4 eine separate Recheneinheit 8, mittels welcher Recheneinheit 8 die Elektronikeinheit 4 den jeweiligen Messwert für die Temperatur des Mediums Tₘ oder den Vergleichstemperatur-Messwert des jeweils verwendeten Vergleichsmediums T_{cm} ermitteln kann. Dabei ist die Elektronikeinheit 4 selbst in der Lage zu erkennen, ob zu einem bestimmten Zeitpunkt gerade eine Vergleichsmessung durchgeführt wird oder nicht. Dazu ist in der Elektronikeinheit 4, insbesondere in der Speichereinheit 6, beispielsweise zumindest ein Algorithmus hinterlegt.

Darüber hinaus verfügt die Elektronikeinheit 4 über eine Anzeigeeinheit 7, mittels welcher zumindest das Durchführen einer Vergleichsmessung angezeigt werden kann. Die Eingabeeinheit 5, die Speichereinheit 6, die Anzeigeeinheit 7 sowie die Recheneinheit 8 sind innerhalb der Elektronikeinheit mittels Verbindungsleitungen 9 miteinander verbunden. Bevorzugt umfasst die Anzeigeeinheit 7 eine digitale Schnittstelle, so dass Messdaten aus der Speichereinheit 6 ausgelesen werden können. Dabei ist es von Vorteil, wenn innerhalb der Speichereinheit 6 jeweils für eine Vergleichsmessung die Vergleichstemperatur T_{c}, gegebenenfalls der Toleranzbereich ΔTₜₒₗ, der jeweils ermittelte Temperaturvergleichs-Messwert T_{cm}, die Abweichung ΔT_{dev} zwischen T_{cm} und T_{c}, und falls ein Betriebsstundenzähler oder eine Echtzeit innerhalb der Elektronikeinheit 4 vorhanden sind, der Zeitpunkt der Vergleichsmessung abgespeichert werden. Auf diese Weise kann für jede durchgeführte Vergleichsmessung ein Kalibrierprotokoll hinterlegt werden.

Um anhand eines Algorithmus zu erkennen, ob eine Vergleichsmessung, durchgeführt wird, kann beispielsweise die mittels des Temperatursensors 2 ermittelte Temperatur als Funktion der Zeit in Form einer Temperaturkurve T(t) aufgezeichnet und betrachtet werden. Eine solche Temperaturkurve T(t) ist schematisch in Fig. 2 gezeigt. Es ist dabei von Vorteil, ein Vergleichsmedium zu wählen, dessen charakteristischer Temperaturpunkt, welcher als Vergleichstemperatur T_{c} herangezogen wird, deutlich außerhalb des Arbeitsbereichs des Thermometers 1 liegt, also außerhalb des für das Thermometer 1 relevanten Temperaturbereichs. Dieser Fall ist auch in Fig. 2 skizziert. Zum Zeitpunkt t_{cm} wird das Thermometer 1, welches zuvor der Temperatur Tₘ ausgesetzt war, in das Vergleichsmedium mit der Vergleichstemperatur T_{c} eingetaucht. Dann kann die Temperaturkurve T(t) grob in drei Bereiche a, b und c unterteilt werden. In den ersten Sekunden (Bereich a), oder Bruchteilen einer Sekunde, erfolgt ein deutlicher Temperatursprung in Richtung der Vergleichstemperatur T_{c}, gefolgt von einem etwas flacheren Verlauf (Bereich b) in die gleiche Richtung. Ab einer bestimmten minimalen Differenz zwischen der Vergleichstemperatur T_{c} und dem aktuellen Vergleichstemperatur-Messwert T_{cm}(t₂) (Bereich c) bewegt sich der Vergleichstemperatur-Messwert T_{cm}(t) dann asymptotisch innerhalb eines bestimmten Toleranzintervalls auf die Vergleichstemperatur T_{c} zu. Im Prinzip kann jeder Abschnitt a,b,c der Temperaturkurve T(t) zur Erkennung der Durchführung einer Vergleichsmessung herangezogen werden. Zu diesem Zweck kann dann beispielsweise eine Steigung der Temperaturkurve T(t), oder eines Abschnitts der Temperaturkurve T(t), die Zeit Δt, welche zum Erreichen eines stabilen Vergleichstemperatur-Messwerts T_{cm} benötigt wird, oder auch ein Temperaturgradient ermittelt werden. Besonders einfach ist die Definition eines minimalen zu erwartenden Temperatursprungs ΔTₘᵢₙ. Wird dieser abrupt beim Vergleich zweier nacheinander aufgenommener Vergleichstemperatur-Messwerte überschritten, so kann gefolgert, dass der Temperatursensor 2 in ein Vergleichsmedium eintaucht.

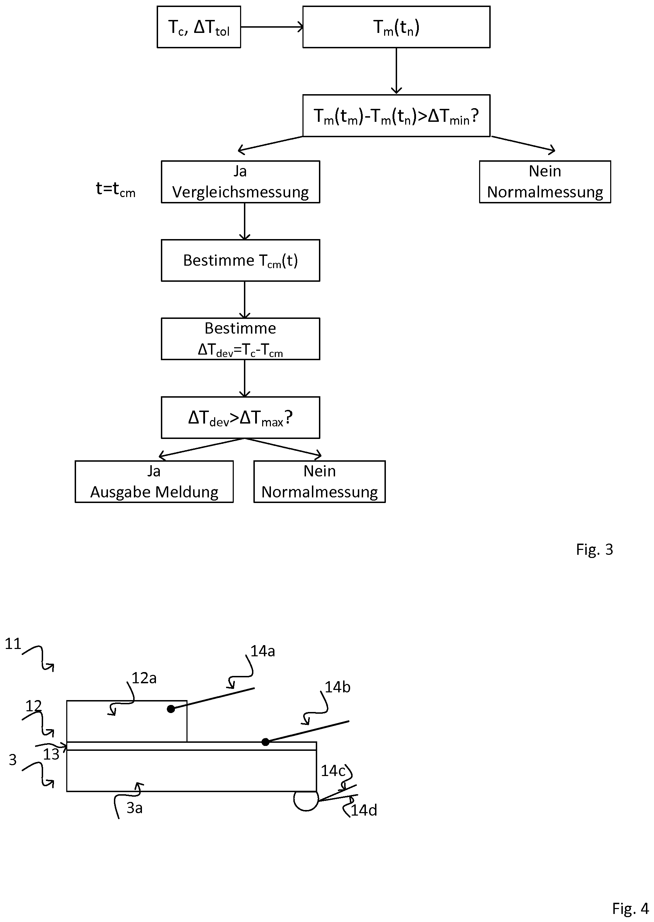

Fig. 3 zeigt ein mögliches innerhalb der Elektronikeinheit ablaufendes Verfahren, mittels welchem erkannt wird, ob eine Vergleichsmessung stattfindet, und die Vergleichsmessung durchgeführt wird. Es versteht sich von selbst, dass diese Ausgestaltung beispielhaft zu verstehen ist. Beliebig viele der Verfahrensschritte und angewendeten Entscheidungskriterien können abgewandelt werden.

Über die Eingabeeinheit 5 wird ein Wert für die Vergleichstemperatur T_{c} und/oder ein Toleranzbereich ΔTₜₒₗ in der Speichereinheit der Elektronikeinheit hinterlegt. Die Elektronikeinheit bestimmt während einer normalen Messung fortlaufend, oder in vorgebbaren Zeitabständen die Temperatur des Mediums Tₘ(t) und berechnet für zwei aufeinander folgende Zeitpunkte tₙ und tₘ jeweils die Temperaturdifferenz Δt=Tₘ(tₘ)-Tₘ(tₙ). Überschreitet diese einen vorgebbaren minimalen Grenzwert ΔTₘᵢₙ, den minimalen Temperatursprung, so taucht der Temperatursensor 2 in ein Vergleichsmedium ein und eine Vergleichsmessung muss durchgeführt werden. Nun wird mittels des Temperatursensors 2 der Vergleichstemperatur-Messwert T_{cm} bestimmt und die Abweichung ΔT_{dev}=T_{c}-T_{cm} ermittelt. Überschreitet die Abweichung beispielsweise einen vorgebbaren Grenzwert ΔTₘₐₓ, so wird eine Meldung generiert, dass der Temperatursensor 2 nicht mehr korrekt arbeitet.

Schließlich zeigt Fig. 4 einen Temperatursensor 11 mit einem Sensorelement 3 und einem Referenzelement 12. Das Referenzelement 12 umfasst ein Material, welches zumindest einen Phasenübergang zweiter Ordnung bei einer vorgegebenen Temperatur aufweist, ähnlich wie in der DE102010040039A1 beschrieben, deren Offenbarungsgehalt der vorliegenden Erfindung zuzurechnen ist.

Im hier gezeigten Ausführungsbeispiel sind das Sensorelement 3 und das Referenzelement 12 jeweils auf keramischen Substraten 3a, 12a. Das keramische Substrat 12a des Referenzelements ist zum einen von der oberen Seite her mit einer elektrisch leitfähigen Schicht überzogen und mittels eines ersten Drahts 14a kontaktiert. Ferner sind das Sensorelement 3 und das Referenzelement 12 entlang der unteren Seitenfläche A des Referenzelements 12, bzw. entlang der oberen Seitenfläche A' des Sensorelements 3, über die Metallisierung 13 miteinander verbunden und thermisch gekoppelt, insbesondere über einen Löt- oder Sinterprozess. Die zweite Kontaktierung des Referenzelements 12 erfolgt über einen zweiten an der Metallisierung 13 angebrachten Draht 14b. Das Sensorelement 3 ist wiederum über die beiden Drähte 14c, 14d kontaktiert.

Wird ein Temperatursensor 11 mit einem Referenzelement 12, wie beispielhaft in Fig. 4 gezeigt, verwendet, so ist die Elektronikeinheit 4 bevorzugt dazu ausgestaltet, eine Referenzmessung durchzuführen. Dazu kann beispielsweise innerhalb der Speichereinheit 6 zumindest ein Wert für die jeweilige Referenztemperatur T_{ref} hinterlegt sein. Die Referenzmessung kann dann analog zur Vergleichsmessung erfolgen, indem der Temperatursensor beispielsweise zuerst in ein erstes Medium mit einer ersten Temperatur T₁<T_{ref} und anschließend in ein zweites Medium mit einer zweiten Temperatur T₂>T_{ref} eingetaucht wird. Dabei werden zumindest die mittels des Referenzelements 12 in bestimmten Zeitintervallen jeweils ermittelten Temperatur-Messwerte Tₘ(t) als Funktion der Zeit, sowie die Änderung einer jeweils herangezogenen, mit dem Phasenübergang einhergehenden physikalischen oder chemischen Größe R(t) als Funktion der Zeit aufgezeichnet. Anschließend kann anhand der charakteristischen Änderung der physikalischen oder chemischen Größe beim Auftreten des Phasenübergangs ein Referenzzeitpunkt t_{ref} bestimmt werden, und die Abweichung ΔT_{ref} des Temperatur-Messwerts Tₘ(t_{ref}) von der Referenztemperatur T_{ref} bestimmt werden.

### Bezugszeichenliste

- 1: Thermometer
- 2: Temperatursensor
- 3: Sensorelement
- 4: Elektronikeinheit
- 5: Eingabeeinheit
- 6: Speichereinheit
- 7: Anzeigeeinheit
- 8: Recheneinheit
- 9: Verbindungsleitung
- 10: Anschlusskabel
- 11: Temperatursensor mit Referenzelement
- 12: Referenzelement
- 13: Metallisierung
- 14a-d: Verbindungsdrähte
- a,b,c: 1., 2., 3. Abschnitt einer Temperaturkurve
- T_{c}: Vergleichstemperatur eines Vergleichsmediums
- ΔTₜₒₗ: Toleranzbereich
- T_{cm}: Vergleichstemperatur-Messwert
- ΔT_{dev}: Abweichung zwischen T_{c} und T_{cm}
- Tₘ: Messwert für die Temperatur des Mediums
- T(t): Temperaturkurve
- t_{cm}: Zeitpunkt des Eintauchens in ein Vergleichsmedium
- ΔTₘᵢₙ: Minimaler Temperatursprung
- ΔTₘₐₓ: Maximal zulässiger Wert für ΔT_{dev}
- T_{ref}: Referenztemperatur
- T₁, T₂: Temperaturen des ersten und zweiten Mediums
- R(t): Mit dem Phasenübergang einhergehende physikalische oder chemische Größe als Funktion der Zeit
- t_{ref}: Referenzzeitpunkt zudem der Phasenübergang stattgefunden hat
- ΔT_{ref}: Abweichung des Temperaturmesswerts zum Zeitpunkt des Phasenübergangs von der Referenztemperatur

## Patentansprüche

1. Vorrichtung (1) zur Bestimmung und/oder Überwachung der Temperatur eines Mediums umfassend zumindest einen Temperatursensor (2) mit zumindest einem Sensorelement (3) und eine Elektronikeinheit (4),
wobei in der Elektronikeinheit (4) zumindest ein Algorithmus hinterlegt ist,
wobei die Elektronikeinheit (4) zumindest
eine Eingabeeinheit (5) mindestens zur Eingabe zumindest einer Vergleichstemperatur (T_{c}) eines Vergleichsmediums und/oder zumindest eines Toleranzbereichs (ΔTₜₒₗ) für die zumindest eine Vergleichstemperatur (T_{c}), und
eine Anzeigeeinheit (7) aufweist,
wobei die Elektronikeinheit (4) dazu ausgestaltet ist, zumindest die Temperatur (Tₘ) des Mediums zu bestimmen und/oder zu überwachen, und
wobei die Elektronikeinheit (4) dazu ausgestaltet ist, anhand des Algorithmus zu erkennen, ob der Temperatursensor (2) zumindest teilweise in zumindest ein Vergleichsmedium mit bekannter Vergleichstemperatur (T_{c}) eintaucht, wobei der Algorithmus auf der Betrachtung der mittels des zu kalibrierenden Temperatursensors (3) ermittelten Temperatur als Funktion der Zeit in Form einer Temperaturkurve T(t) basiert, und im Falle, dass der Temperatursensor (2) in ein Vergleichsmedium eintaucht, eine Vergleichsmessung zur Kalibrierung und/oder Validierung des Sensorelements (3) durchzuführen, bei welcher anhand eines vom Sensorelement (3) empfangenen Empfangssignals die Temperatur des Vergleichsmediums in Form eines Vergleichstemperatur-Messwerts (T_{cm}) bestimmt wird, und die Durchführung der Vergleichsmessung und/oder den Vergleichstemperatur-Messwert (T_{cm}) mittels der Anzeigeeinheit (7) anzuzeigen.

2. Vorrichtung nach Anspruch 1,
umfassend eine Speichereinheit (6), auf welcher zumindest die zumindest eine Vergleichstemperatur (T_{c}) und/oder der jeweilige Toleranzbereich (ΔTₜₒₗ), und/oder zumindest ein Vergleichstemperatur-Messwert (T_{cm}), insbesondere gemeinsam mit der jeweils zugehörigen Vergleichstemperatur (T_{c}), speicherbar sind.

3. Vorrichtung nach zumindest einem der vorhergehenden Ansprüche,
wobei es sich bei der Anzeigeeinheit (7) um eine optische Schnittstelle, insbesondere um eine LED oder um ein Display, oder um eine digitale Schnittstelle handelt.

4. Vorrichtung nach zumindest einem der vorhergehenden Ansprüche,
wobei die Elektronikeinheit (4) dazu ausgestaltet ist, die Abweichung (ΔT_{dev}) des Vergleichstemperatur-Messwerts (T_{cm}) von der Vergleichstemperatur (T_{c}) zu ermitteln, und im Falle, dass die Abweichung (ΔT_{dev}) einen vorgebbaren Grenzwert (ΔTₘₐₓ) überschreitet, eine Meldung zu generieren und/oder mittels der Anzeigeeinheit (7) anzuzeigen und/oder die Abweichung (ΔT_{dev}) auf der Speichereinheit (6) zu hinterlegen.

5. Vorrichtung nach zumindest einem der vorhergehenden Ansprüche,
wobei die Elektronikeinheit (4) dazu ausgestaltet ist, im Falle, dass der Vergleichs-Temperaturmesswert (T_{cm}) außerhalb eines Toleranzbereichs (ΔTₜₒₗ) liegt, eine Meldung zu generieren und/oder mittels der Anzeigeeinheit (7) anzuzeigen.

6. Vorrichtung nach zumindest einem der vorhergehenden Ansprüche,
wobei der Temperatursensor (11) zumindest ein Referenzelement (13) umfasst, welches zumindest teilweise aus einem Material gefertigt ist, welches zumindest einen Phasenübergang zweiter Ordnung bei einer vorgegebenen Referenztemperatur (T_{ref}) aufweist.

7. Vorrichtung nach Anspruch 6,
wobei das Referenzelement (12) und das Sensorelement (3) auf zumindest einem oder zumindest zwei keramischen Substraten (3a, 12a) angeordnet sind, welches/welche jeweils im Bereich zumindest einer Seitenfläche (A,A')metallisiert und über die Metallisierung/Metallisierungen (13) thermisch gekoppelt, insbesondere über einen Löt- oder Sinterprozess verbunden, ist/sind.

8. Vorrichtung nach Anspruch 6 oder 7,
wobei die Elektronikeinheit (4) dazu ausgestaltet ist, eine Referenzmessung mittels des zumindest einen Referenzelements (12) durchzuführen, bei welchem der zumindest eine Phasenübergang erkannt wird.

9. Verfahren zur Kalibrierung und/oder Validierung einer Vorrichtung (1) nach zumindest einem der vorhergehenden Ansprüche umfassend folgende Verfahrensschritte:
- Eingabe zumindest einer Vergleichstemperatur (T_{c}) eines Vergleichsmediums und/oder zumindest eines Toleranzbereichs (ΔTₜₒₗ) für die zumindest eine Vergleichstemperatur (T_{c}),
- Erkennen, ob der Temperatursensor (2) zumindest teilweise in ein Vergleichsmedium eintaucht, anhand eines Algorithmus, wobei der Algorithmus auf der Betrachtung der mittels des zu kalibrierenden Temperatursensors (3) ermittelten Temperatur als Funktion der Zeit in Form einer Temperaturkurve T(t) basiert,
- Durchführung einer Vergleichsmessung im Falle, dass der Temperatursensor zumindest teilweise in ein Vergleichsmedium eintaucht,
- Bestimmung der Temperatur des Vergleichsmediums in Form eines Vergleichstemperatur-Messwerts (T_{cm}), und
- Anzeigen der Durchführung einer Vergleichsmessung.

10. Verfahren nach Anspruch 9,
wobei zumindest eine bekannte Vergleichstemperatur (T_{c}) zumindest eines Vergleichsmediums und/oder zumindest ein Toleranzbereich (ΔTₜₒₗ) für zumindest eine Vergleichstemperatur gespeichert wird.

11. Verfahren nach Anspruch 9 oder 10,
wobei ein Vergleichsmedium mit einer Vergleichstemperatur (T_{c}) außerhalb des für die Vorrichtung (1) relevanten Temperaturbereichs gewählt wird.

12. Verfahren nach zumindest einem der Ansprüche 9-11,
wobei in vorgebbaren Zeitintervallen mittels des Temperatursensors (3) jeweils gemessene Vergleichstemperatur-Messwerte (T_{cm}) als Funktion der Zeit in Form einer Temperaturkurve (T(t)) aufgezeichnet werden, und/oder wobei eine Steigung der Temperaturkurve (T(t)) oder eines Abschnitts der Temperaturkurve (T(t)), die Zeit, welche zum Erreichen des Vergleichstemperatur-Messwerts (T_{cm}) benötigt wird, oder auch ein Temperaturgradient, insbesondere in Bezug auf ein vorgebbares Zeitintervall ermittelt wird.

13. Verfahren nach zumindest einem der Ansprüche 9-12,
wobei die Abweichung (ΔT_{dev}) des Vergleichstemperatur-Messwerts (T_{cm}) von der Vergleichstemperatur (T_{c}) bestimmt wird.

14. Verfahren nach zumindest einem der Ansprüche 9-13,
wobei im Falle, dass die Abweichung (ΔT_{dev}) einen vorgebbaren Grenzwert (ΔTₘₐₓ) überschreitet, und/oder im Falle dass der Vergleichstemperatur-Messwert (T_{cm}) außerhalb des Toleranzbereichs (ΔTₜₒₗ) liegt, eine Meldung generiert wird.

15. Verfahren zur Bestimmung einer Referenztemperatur einer Vorrichtung nach zumindest einem der Ansprüche 6-8 umfassend folgende Verfahrensschritte:
- Eintauchen des Temperatursensors (2) in ein erstes Medium mit einer ersten Temperatur (T₁), welche unterhalb der Referenztemperatur (T_{ref}) liegt,
- Eintauchen des Temperatursensors (2) in ein zweites Medium mit einer zweiten Temperatur (T₂), welche oberhalb der Referenztemperatur (T_{ref}) liegt,
- Aufzeichnen der mittels Temperatursensors (2) in bestimmten Zeitintervallen jeweils ermittelten Temperatur-Messwerte als Funktion der Zeit (Tₘ(t)),
- Aufzeichnen einer mit dem Phasenübergang einhergehenden physikalischen oder chemischen Größe des Referenzelements, welche bei der Referenztemperatur (T_{ref}) eine Änderung durchläuft, als Funktion der Zeit (R(t)),
- Ermittlung des Referenzzeitpunkts (tref), an welchem der Phasenübergang stattgefunden hat, anhand der Änderung der physikalischen oder chemischen Größe, und
- Bestimmung der Abweichung (ΔT_{ref}) des Temperatur-Messwerts (Tₘ(t_{ref})) zum Referenzzeitpunkt (t_{ref}) von der Referenztemperatur (T_{ref}).

## Claims

1. Apparatus (1) designed to determine and/or monitor the temperature of a medium, comprising at least one temperature sensor (2) with at least one sensor element (3) and an electronics unit (4),
wherein at least one algorithm is saved in the electronics unit (4) wherein the electronics unit (4) comprises at least
an input unit (5) at least to enter at least one comparison temperature (T_{c}) of a comparison medium and/or at least a tolerance range (ΔTₜₒₗ) for the at least one comparison temperature (T_{c}), and
a display unit (7),
wherein the electronics unit (4) is designed to determine and/or monitor at least the temperature (Tₘ) of the medium, and
wherein the electronics unit (4) is designed to use the algorithm to detect whether the temperature sensor (2) is immersed at least partially in a comparison medium with a known comparison temperature (T_{c}), wherein the algorithm is based on the evaluation of the temperature, determined using the temperature sensor (2) to be calibrated, as a function of time in the form of a temperature curve (T(t)),
and in the case that the temperature sensor (2) is immersed in a comparison medium it is designed to perform a comparison measurement for the calibration and/or validation of the sensor element (3), wherein, in said measurement, the temperature of the comparison medium is determined in the form of a comparison temperature measured value (T_{cm}) using a reception signal received from the sensor element (3), wherein the display unit (7) is used to display the execution of the comparison measurement and/or the comparison temperature measured value (T_{cm}).

2. Apparatus as claimed in Claim 1,
comprising a memory unit (6) on which it is possible to save the at least one comparison temperature (T_{c}) and/or the corresponding tolerance range (ΔTₜₒₗ) and/or at least a comparison temperature measured value (T_{cm}), particularly together with the associated comparison temperature (T_{c}).

3. Apparatus as claimed in at least one of the previous claims,
wherein the display unit (7) is an optical interface, particularly an LED or a display, or a digital interface.

4. Apparatus as claimed in at least one of the previous claims, wherein the electronics unit (4) is designed to determine the deviation (ΔT_{dev}) between the comparison temperature measured value (T_{cm}) and the comparison temperature (T_{c}) and, if the deviation (ΔT_{dev}) exceeds a predefinable limit value (ΔTₘₐₓ), to generate a message and/or display it via the display unit (7), and/or to save the deviation (ΔT_{dev}) on the memory unit (6).

5. Apparatus as claimed in at least one of the previous claims, wherein the electronics unit (4) is designed to generate a message, and/or display said message via the display unit (7) if the comparison temperature measured value (T_{cm}) is outside a tolerance range (ΔTₜₒₗ).

6. Apparatus as claimed in at least one of the previous claims, wherein the temperature sensor (11) comprises at least one reference element (13) which is at least partially made from a material which has at least one phase transition of the second order at a predefined reference temperature (T_{ref}).

7. Apparatus as claimed in Claim 6,
wherein the reference element (12) and the sensor element (3) are arranged on at least one or at least two ceramic substrates (3a, 12a) which is/are metalized in each case in the area of at least a lateral surface (A, A') and thermally coupled via the metallization(s) (13), particularly connected via a soldering or sintering process.

8. Apparatus as claimed in Claim 6 or 7,
wherein the electronics unit (4) is designed to perform a reference measurement using the at least one reference element (12) where the at least one phase transition is detected.

9. Procedure for the calibration and/or validation of an apparatus (1) as claimed in at least one of the previous claims, said procedure comprising the following steps:
- Entry of at least one comparison temperature (T_{c}) of a comparison medium and/or at least one tolerance range (ΔTₜₒₗ) for the at least one comparison temperature (T_{c}),
- Detection of whether the temperature sensor (2) is at least partially immersed in a comparison medium using an algorithm, wherein the algorithm is based on the evaluation of the temperature, determined using the temperature sensor (2) to be calibrated, as a function of time in the form of a temperature curve (T(t)),
- Performance of a comparison measurement in the case that the temperature sensor is immersed at least partially in a comparison medium,
- Determination of the temperature of the comparison medium in the form of a comparison temperature measured value (T_{cm}), and
- Display of the execution of a comparison measurement.

10. Procedure as claimed in Claim 9,
wherein at least a known comparison temperature (T_{c}) of at least a comparison medium and/or at least a tolerance range (ΔTₜₒₗ) is saved for at least a comparison temperature.

11. Procedure as claimed in Claim 9 or 10,
wherein a comparison medium is selected with a comparison temperature (T_{c}) outside the temperature range that is relevant for the apparatus (1).

12. Procedure as claimed in at least one of the Claims 9 to 11,
wherein comparison temperature measured values (T_{cm}) which are measured using the temperature sensor (3) are recorded at predefinable time intervals as a function of the time in the form of a temperature curve (T(t)), and/or wherein a slope of the temperature curve (T(t)) or of a section of the temperature curve (T(t)), the time required to reach the comparison temperature measured value (T_{cm}), or a temperature gradient is determined, particularly in relation to a predefinable time interval.

13. Procedure as claimed in at least one of the Claims 9 to 12,
wherein the deviation (ΔT_{dev}) of the comparison temperature measured value (T_{cm}) from the comparison temperature (T_{c}) is determined.

14. Procedure as claimed in at least one of the Claims 9 to 13,
wherein a message is generated if the deviation (ΔT_{dev}) exceeds a predefinable limit value (ΔTₘₐₓ) and/or if the comparison temperature measured value (T_{cm}) is outside the tolerance range (ΔTₜₒₗ).

15. Procedure to determine a reference temperature of an apparatus as claimed in at least one of the Claims 6 to 8, comprising the following steps:
- Immersion of the temperature sensor (2) in a first medium with a first temperature (T₁), which is below the reference temperature (T_{ref}),
- Immersion of the temperature sensor (2) in a second medium with a second temperature (T₂), which is above the reference temperature (T_{ref}),
- Recording of the temperature measured values, determined at certain time intervals by the temperature sensor (2), as a function of time (Tₘ(t)),
- Recording, as a function of time (R(t)), of a physical or chemical variable of the reference element which is associated with the phase transition, said variable experiencing a change at the reference temperature (T_{ref}),
- Determination of the reference point in time (t_{ref}) when the phase transition took place on the basis of the change in the physical or chemical variable, and
- Determination of the deviation (ΔT_{ref}) of the temperature measured value (Tₘ(t_{ref})) from the reference temperature (T_{ref}) at the reference time (tref).

## Revendications

1. Dispositif (1) destiné à la détermination et ou la surveillance de la température d'un produit comprenant au moins un capteur de température (2) avec au moins un élément capteur (3) et une unité électronique (4),
au moins un algorithme étant enregistré dans l'unité électronique (4) l'unité électronique (4) comprenant au moins
une unité d'entrée (5) au minimum pour l'entrée d'au moins une température de comparaison (T_{c}) d'un produit de comparaison et/ou d'au moins une plage de tolérance (ΔTₜₒₗ) pour l'au moins une température de comparaison (T_{c}), et
une unité d'affichage (7),
l'unité électronique (4) étant conçue de telle sorte à déterminer et/ou à surveiller au moins la température (Tₘ) du produit, et
l'unité électronique (4) étant conçue de telle sorte à détecter, au moyen de l'algorithme, si le capteur de température (2) est immergé au moins partiellement dans un produit de comparaison dont la température de comparaison (T_{c}) est connue, lequel algorithme repose sur l'évaluation de la température déterminée - en tant que fonction du temps sous la forme d'une courbe de température (T(t)) - au moyen du capteur de température (2) à étalonner, et dans le cas où le capteur de température (2) est immergé dans un produit de comparaison, à effectuer une mesure de comparaison en vue de l'étalonnage et/ou de la validation de l'élément capteur (3), mesure pour laquelle est déterminée la température du produit de comparaison sous la forme d'une valeur mesurée de température de comparaison (T_{cm}) sur la base d'un signal de réception reçu par l'élément capteur (3), et à afficher l'exécution de la mesure de comparaison et/ou à afficher la valeur mesurée de température de comparaison (T_{cm}) au moyen de l'unité d'affichage (7).

2. Dispositif selon la revendication 1,
comprenant une unité mémoire (6), sur laquelle peuvent être enregistrées au minimum l'au moins une température de comparaison (T_{c}) et/ou la plage de tolérance (ΔT_{tοl}) correspondante, et/ou au minimum une valeur mesurée de température de comparaison (T_{cm}), notamment conjointement avec la température de comparaison (T_{c}) correspondante.

3. Dispositif selon au moins l'une des revendications précédentes,
pour lequel il s'agit, concernant l'unité d'affichage (7), d'une interface optique, notamment d'une LED ou d'un afficheur, ou d'une interface numérique.

4. Dispositif selon au moins l'une des revendications précédentes,
pour lequel l'unité électronique (4) est conçue de telle sorte à déterminer l'écart (ΔT_{dev}) entre la valeur mesurée de température de comparaison (T_{cm}) et la température de comparaison (T_{c}) et, dans le cas où l'écart (ΔT_{dev}) dépasse un seuil prédéfinissable (ΔTₘₐₓ), à générer un message et/ou à afficher un message au moyen de l'unité d'affichage (7), et/ou à enregistrer l'écart (ΔT_{dev}) sur l'unité mémoire (6).

5. Dispositif selon au moins l'une des revendications précédentes,
pour lequel l'unité électronique (4) est conçue de telle sorte, dans le cas où la valeur mesurée de température de comparaison (T_{cm}) est en dehors de la plage de tolérance (ΔTₜₒₗ), à générer un message et/ou à afficher un message au moyen de l'unité d'affichage (7).

6. Dispositif selon au moins l'une des revendications précédentes,
pour lequel le capteur de température (11) comprend au moins un élément de référence (13), lequel est constitué au moins partiellement d'un matériau qui présente au moins une transition de phase de second ordre à une température de référence (T_{ref}) prédéfinissable.

7. Dispositif selon la revendication 6,
pour lequel l'élément de référence (12) et l'élément capteur (3) sont disposés sur au moins un ou au moins deux substrats céramiques (3a, 12a), lequel/lesquels est/sont métallisé(s) dans une zone au moins d'une surface latérale (A, A') et couplé(s) thermiquement à travers la/les métallisation(s) (13), notamment relié(s) au moyen d'un procédé de brasage ou de frittage.

8. Dispositif selon la revendication 6 ou 7,
pour lequel l'unité électronique (4) est conçue de telle sorte à effectuer une mesure de référence au moyen de l'au moins un élément de référence (12), pour lequel est détectée au moins une transition de phase.

9. Procédé destiné à l'étalonnage et/ou la validation d'un dispositif (1) selon au moins l'une des revendications précédentes, comprenant les étapes de procédé suivantes :
- Entrée d'au moins une température de comparaison (T_{c}) d'un produit de comparaison et/ou d'au moins une plage de tolérance (ΔT_{tοl}) pour l'au moins une température de comparaison (T_{c}),
- Détection au moyen d'un algorithme si le capteur de température (2) est immergé au moins partiellement dans un produit de comparaison, lequel algorithme repose sur l'évaluation de la température déterminée - en tant que fonction du temps sous la forme d'une courbe de température (T(t)) - au moyen du capteur de température (2) à étalonner,
- Exécution d'une mesure de comparaison dans le cas où le capteur de température est immergé au moins partiellement dans un produit de comparaison,
- Détermination de la température du produit de comparaison sous la forme d'une valeur mesurée de température de comparaison (T_{cm}), et
- Affichage de l'exécution d'une mesure de comparaison.

10. Procédé selon la revendication 9,
pour lequel au moins une température de comparaison (T_{c}) connue d'au moins un produit de comparaison et/ou au moins une plage de tolérance (ΔT_{tοl}) pour au moins une température de comparaison sont enregistrées.

11. Procédé selon la revendication 9 ou 10,
pour lequel un produit de comparaison est choisi avec une température de comparaison (T_{c}) en dehors de la plage de température importante pour le dispositif (1).

12. Procédé selon au moins l'une des revendications 9 à 11,
pour lequel sont enregistrées au moyen du capteur de température (3), à des intervalles de temps prédéfinissables, les valeurs mesurées de température de comparaison (T_{cm}) en tant que fonction du temps, sous la forme d'une courbe de température (T(t)), et/ou pour lequel une pente de la courbe de température (T(t)) ou d'une partie de la courbe de température (T(t)), le temps nécessaire pour l'atteinte de la valeur mesurée de température de comparaison (T_{cm}), ou encore un gradient de température, sont déterminés notamment en référence à un intervalle de temps prédéfinissable.

13. Procédé selon au moins l'une des revendications 9 à 12,
pour lequel l'écart (ΔT_{dev}) de la valeur mesurée de température de comparaison (T_{cm}) est déterminé par la température de comparaison (T_{c}).

14. Procédé selon au moins l'une des revendications 9 à 13,
pour lequel, dans le cas où l'écart (ΔT_{dev}) dépasse une valeur limite (ΔTₘₐₓ) prédéfinissable, et/ou dans le cas où une valeur mesurée de température de comparaison (T_{cm}) est en dehors de la plage de tolérance (ΔTₜₒₗ), un message est généré.

15. Procédé destiné à la détermination d'une température de référence d'un dispositif selon au moins l'une des revendications 6 à 8, comprenant les étapes de procédé suivantes :
- Immersion du capteur de température (2) dans un premier produit avec une première température (T₁), laquelle température est inférieure à la température de référence (T_{ref}),
- Immersion du capteur de température (2) dans un deuxième produit avec une deuxième température (T₂), laquelle température est supérieure à la température de référence (T_{ref}),
- Enregistrement en tant que fonction du temps (Tₘ(t)) des valeurs de température mesurées selon des intervalles de temps définis au moyen du capteur de température (2),
- Enregistrement en tant que fonction du temps (R(t)) d'une grandeur de l'élément de référence physique ou chimique associée à la transition de phase, laquelle grandeur subit une modification à la température de référence (T_{ref}),
- Détermination de l'instant de référence (t_{ref}) auquel la transition de phase a eu lieu, au moyen de la modification de la grandeur physique ou chimique, et
- Détermination de l'écart (ΔT_{ref}) entre la valeur mesurée de température (Tₘ(t_{ref})) à l'instant de référence (t_{ref}) et la température de référence (T_{ref}).
